# EUROPEAN PATENT APPLICATION

(11) **EP 1 181 859 A1**
(43) Date of publication of application: **27.02.2002**
(21) Application number: 01203150.6
(22) Date of filing: 20.08.2001
(51) Int. Cl.: A01D 45/06

(54) **Apparatus and method for harvesting fiber crops**

(30) Priority: 18.08.2000 NL 1015966
(71) Applicant: Hempron B.V., 9679 EG Scheemda (NL)
(72) Inventor: Dun, ALbert, 9665 JE Oude Pekela (NL)
(74) Representative: Prins, Adrianus Willem

(57) **Abstract**

An apparatus for processing hemp stalks, comprising feeding means (10,20) for feeding stalks in the longitudinal direction, a cutting edge (30) located downstream of the feeding means, which cutting edge extends substantially transversely to the conveying direction, and a rotatable drum (40) located downstream of the feeding means, which drum is provided on the outer side with at least one knife (41) extending in the axial direction of the drum, of which knife a cutting edge is directed in the rotational direction, and at least one comb (45) circumferentially extending in the axial direction at a distance from the at least one knife, of which comb a combing edge is directed in the rotational direction, which comprises placing the at least one knife, the at least one comb, and the cutting edge such that, in operation, the at least one knife and the at least one comb move past the cutting edge.

## Description

The invention relates to a method and an apparatus for harvesting fiber crop stalks, in particular hemp.

Full-grown hemp suitable for harvesting has about 3 m long hemp straw stalks. These hemp straw stalks have a heart of heartwood surrounded by hemp fibers. After harvesting, the hemp fiber is separated from the heartwood; the resulting hemp fibers are suitable as a raw material for processing into, for instance, technical textile, paper pulp, fleece mats, and the like.

In the known method of harvesting hemp, the crop is mown just above ground level. The mown stalks are left on the land for some tine for the purpose of retting and are then collected and baled. The baled stalks are then conveyed to a processing unit, where the bales are taken apart and the stalks are separated with much energy. The stalks are separated into the fiber part and the heartwood part. The fiber part is then processed further into, for instance, technical textile, fleece mats, paper pulp, etc.

A drawback of this known method of harvesting hemp is that baling and then taking apart the stalk bales again involves many additional operations. Besides, the treatment of stalks originating from bales results in fibers having irregular lengths. This is a drawback in further processing of the fibers.

The invention has for its object to provide a method and an apparatus for harvesting hemp with which fibers having regular lengths can be obtained efficiently.

To this end, the invention provides an apparatus according to claim 1. By means of the harvester the stalks can be processed on the land, which comprises cutting the stalks, and thus the fibers, to the right length and already partially separating the fibers from the heart. Subsequently, the stalks cut to length are further taken apart, if desired also on the land, by means of a movable separator.

The invention also relates to a method according to claim 7.

Very advantageous embodiments of the invention are described in the dependent claims. Further aspects, effects, advantages, and details of the invention will hereinafter be explained on the basis of an exemplary embodiment of the invention, with reference to the drawing, in which:
Fig. 1 is a diagrammatic cross-section of the harvester according to the invention,
Fig. 2 is a view of a cutting drum of a harvester according to the invention,
Fig. 3 shows a part of a combing edge,
Fig. 4 is a top plan view of the harvester of Fig. 1,
Fig. 5 is a diagrammatic side view of a separator.

In the following example, the invention will be clarified on the basis of harvesting hemp. The hemp to be harvested is located on the land and has, at the time of harvesting, a height of about 3 m. Hemp plants suitable for harvesting have a heart of relatively soft heartwood surrounded by relatively stiff hemp fibers. The stalks are hard and stiff. Although in the described example, harvesting of hemp is started from, the invention can be used with all fiber crops in which the fibers are obtained from the stalk, and in particular crops in which the stalks are provided with a wood-like heart surrounded by fibers, such as, for instance, flax.

First, the hemp stalks are mown and cut to lengths of about 60 cm. The stalks are laid on the land in equal orientation, preferably in the mowing direction. Subsequently, the stalks are left on the land for a certain time to dry in swaths and to ret. Preferably, during this period, the stalks are turned without losing the mutual equal orientation. During retting, the fibers in the stalks come slightly loose from each other and from the heartwood.

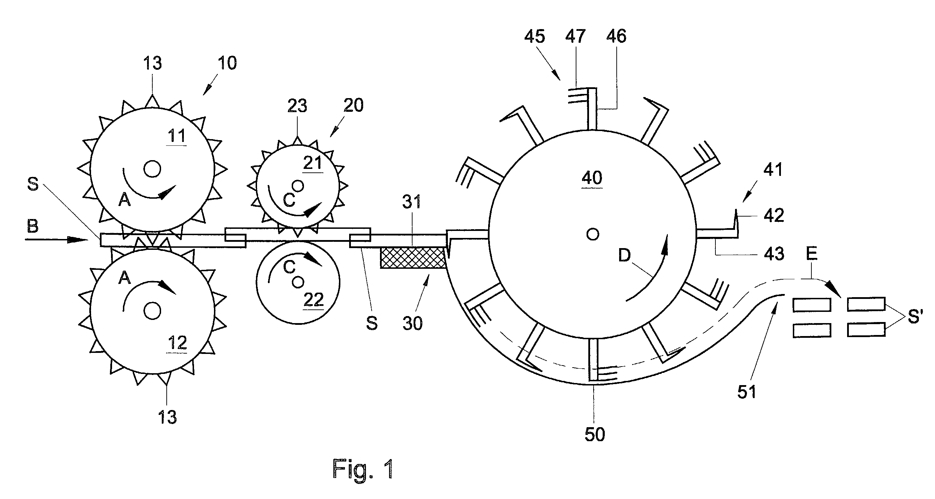

For processing the retted stalks, the invention provides a harvester 1, as diagrammatically shown in Fig. 1. The harvester 1 has a frame, not shown, provided with driving means, such as, for instance, wheels, with which the harvester can be moved over the land during processing of hemp stalks. Such a frame and driving means are known as such from practice, for instance in combines.

The harvester has a first roller pair 10, consisting of an upper roller 11 and a lower roller 12, both provided with a drive 19, with which the rollers 11, 12 can be rotated in the direction indicated by A. The rollers 11, 12 are provided on their outer surface with projecting parts 13. Fed into the roller pair 10 are stalks to be processed, which are then moved in a conveying direction B through the rotation of the rollers 11, 12 by the projecting parts.

Located in the conveying direction at a distance downstream of the roller pair 10 is a second roller pair 20, consisting of an upper roller 21 and a lower roller 22, both rollers 21, 22 provided with a drive 29, with which the rollers 21, 22 can be rotated in the direction indicated by C. The upper roller 21 is provided on the outer surface with projecting parts 23, while the outer surface of the lower roller 22 is substantially smooth. The roller pair 20 is positioned such that stalks conveyed by the first roller pair 10 in the direction B are fed into the second roller pair 20 and then conveyed further through the rotation of the rollers 21, 22 in the direction C. Since the lower roller 22 is substantially smooth, the lower limit of the conveyed stalks is well defined.

Located in the conveying direction at a distance downstream of the second roller pair 20 is a cutting edge 30. The cutting edge 30 has a substantially flat upper side 31, which extends over the width of the roller pair 20. The upper side 31 is substantially located at the level of the nip of the roller pair 20.

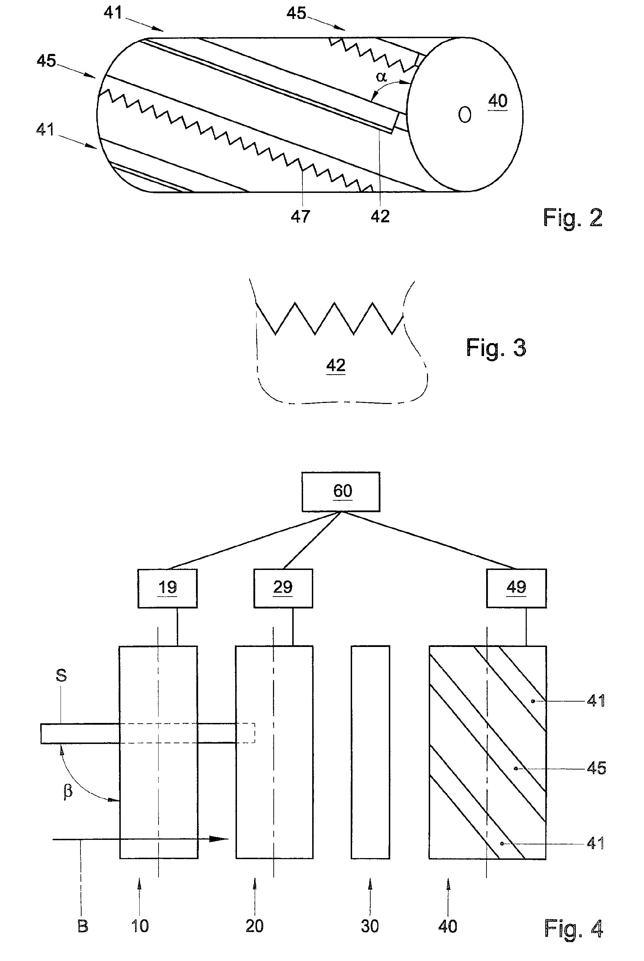

Located in the conveying direction downstream of the cutting edge 30 is a drum 40. The drum 40 is provided with a drive 49, with which the drum 40 can be rotated in the direction of the arrow D. Equally distributed over the circumference of the drum, cutting knives 41 are arranged on the outer surface 44 of the drum 40. Each cutting knife 41 has a cutting edge 42, which, by means of a spacer 43, is held at a distance from the outer surface 44 of the drum. The cutting edge 42 is directed in the rotational direction D of the drum. Each cutting knife 41 extends along substantially the full width of the drum 44. In this example, the cutting knives 41 are placed at an angle α to the axial axis of the drum 44, as shown in Fig. 2.

Between the cutting knives 41, equally distributed over the circumference of the drum, combs 45 are arranged on the outer surface 44 of the drum 40. Each comb 45 has a toothed combing edge 47, as shown in Fig. 3 in top plan view, which, by means of a spacer 46, is kept at a distance from the outer surface 44 of the drum. The combing edge 47 is directed in the rotational direction D of the drum. The combing edge 47 may be made of, for instance, sheet steel. The shape of the projecting teeth of the combing edge is not limited to the tooth profile shown in Fig. 3 by way of example; any other desired profile may be used. Each comb 45 extends along substantially the full width of the drum 44. In this example, the combs 45 are arranged parallel to the cutting knives 41 at an angle α to the axial axis of the drum 44, as shown in Fig. 2. In Fig. 3 is shown an example of a profile for the toothed combing edges 47.

The relevant spacers 43, 46 for the cutting edges 42 and the combing edges 47 are such that, in operation, they move just past the cutting edge 30, when the drum 40 rotates in the direction D. To this end, the cutting edges and combing edges are directed in the circumferential direction D; thus, stalks conveyed onto the upper surface 31 are first gripped by a comb, which at least partially combs loose the fibers from the heartwood. Subsequently, the stalks are cut by a knife at the edge of the upper surface 31.

Located at the underside of the drum 40 is a plate-shaped guide 50, which extends along the path of the combs and knives 41, 45. Thus, stalks cut at the cutting edge 30 are moved by the combs and knives along the guide 50 in the direction E as far as an end 51 of the guide 50. At the end 51, the stalks cut are collected and conveyed further.

The apparatus 1 is further provided with a control unit 60, which is connected with the respective drive units 19, 29, 49 of the first and second roller pairs 10, 20, and the drum 40. The control unit 60 is arranged to control the rates of rotation of the drive units 19, 29, 49.

According to the invention, the stalks retted on the land are taken up and fed to the first roller pair 10 of the harvester 1. In Figs. 1 and 4 are shown a few stalks S. It is important that the orientation of the stalks is always directed substantially parallel to the conveying direction B, and that, in top plan view, the stalks S are directed substantially transversely to the axial axes of the relevant roller pairs, as shown in Fig. 4. The angle β may, for instance, range from 75° to 90°, in particular from 85° to 90°. By the first roller pair 10 the stalks are slightly bruised, so that the fibers are already slightly loosened from the heart. Subsequently, the stalks are moved further in the direction of the second roller pair 20, where the stalks are bruised to a somewhat lesser degree. By the flat lower roller 22 the stalks are aligned at a specific height, so that the stalks are accurately moved onto the upper surface 31 of the cutting edge 31.

The control unit 60 drives the rollers 11, 12, 21, 22, and the drum 40 such that the stalks fed are cut to a specific length by means of the knives, by adjusting to each other the rate of feed obtained with the roller pairs 10, 20 and the rate of rotation of the drum 40. The length to which the stalks are cut preferably ranges from 5 to 10 cm and in particular from 7.5 to 8.5 cm. Such fiber lengths are particularly suitable for further processing.

Through the rotation of the drum, the stalks are first combed by a comb and then cut by a knife. The comb effects a considerable separation of the fibers from the heart. Thus, the stalks S' delivered at the end of the guide 50 are already divided to a substantial degree into heart and fibers. The use of the harvester 1 has the advantage that the stalk parts cut, and thus the fibers, have a very slight spreading in the length distribution; this has the advantage that in the next processing steps a very regular final result can be obtained.

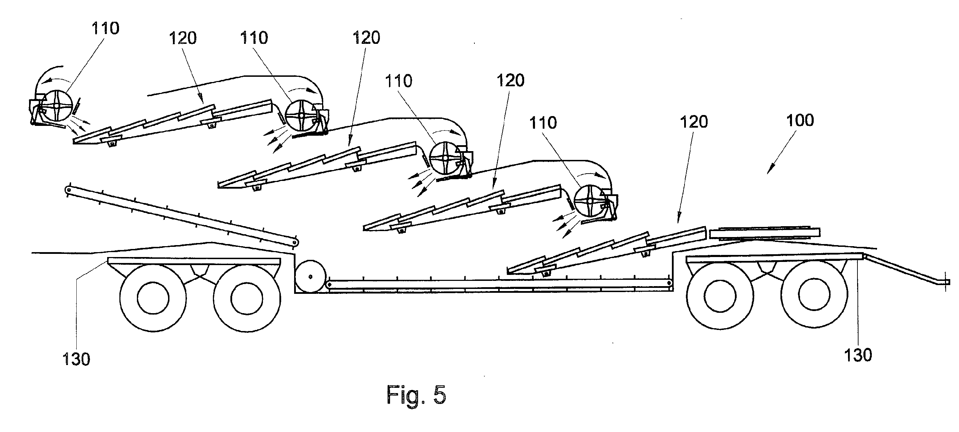

The stalks thus obtained, from which the fibers and the heartwood have already partially come loose from each other, can then be processed further, if desired after storage. Preferably, the stalks cut are directly processed further by nearly completely separating the fibers from the heartwood. To this end, a separating machine is used, such as the separator 100 shown in Fig. 5. The separator 100 has a number of, for instance four, disintegrator units 110 and a number of, for instance four, shaking screens 120. Such disintegrator units 110 are known from practice and are arranged to bruise the stalks, which comprises separating the fibers from the heartwood. Such shaking screens 120 are likewise known from practice and are arranged to separate fibers and heartwood by bringing both onto a shaking screen, during which the heartwood falls through the screen. The heartwood fallen through the screen is collected, as are the fibers left on the screen. The disintegrator units 110 and the shaking screens 120 are placed alternately, and the stalks to be processed are first processed in a disintegrator unit 110 and then fed into a shaking screen 120. Through the successive steps of disintegrator and shaking screen, the final result is that properly separated fibers and heartwood are obtained, for instance having a purity of 90% or more wood. The separator 100 is preferably, as shown, designed to be mobile by means of a movable frame 130, so that the separation can take place in the field immediately after cutting and combing with the harvester 1. Accordingly, the work can be done with or without intermediate storage, and both the fibers and the heartwood can be conveyed directly to the relevant processing units for further processing.

Although, in this example, the drum 40 is provided with alternately arranged knives and combs, the invention may also be designed with a configuration in which knives and/or several combs are placed side by side in the circumferential direction. It is very advantageous to place several combs side by side in the circumferential direction. This accelerates the separation of fibers and heartwood, because several combs treat the stalks before cutting by a next knife.

## Claims

1. An apparatus for processing hemp stalks, comprising feeding means (10, 20) for feeding stalks in the longitudinal direction,
a cutting edge (30) located downstream of the feeding means (10, 20), which cutting edge extends substantially transversely to the conveying direction (B), and
a rotatable drum (40) located downstream of the feeding means (10, 20), which drum is provided on an outer side with at least one knife (41) extending in the axial direction of the drum (40), of which knife a cutting edge is directed in the rotational direction, and at least one comb (45) circumferentially extending in the axial direction at a distance from the at least one knife (41), of which comb a combing edge is directed in the rotational direction, which comprises placing the at least one knife (41), the at least one comb (45), and the cutting edge (30) such that, in operation, the at least one knife (41) and the at least one comb (45) move past the cutting edge (30).

2. An apparatus according to claim 1, in which the cutting edge (42) of the at least one knife (41) is arranged at a distance from an outer surface (44) of the drum (40).

3. An apparatus according to claim 1 or 2, in which the combing edge (47) of the at least one comb (45) is located at a distance from an outer surface (44) of the drum (40).

4. An apparatus according to any one of the preceding claims, in which the at least one knife (41) lies at an angle to an axial axis of the drum (40).

5. An apparatus according to any one of the preceding claims, in which the at least one comb (45) lies at an angle to an axial axis of the drum (40).

6. An apparatus according to any one of the preceding claims, in which the feeding means (10, 20) comprise at least one roller pair (10, 20).

7. A method for processing hemp stalks with fibers around heartwood, which comprises
feeding stalks, which stalks are oriented substantially in the feeding direction,
at least partially combing loose the fibers from the stalks oriented in the feeding direction, and
cutting combed stalks.

8. A method according to claim 7, which further comprises separating the fibers and the heartwood from the cut and combed stalks.
